# EUROPEAN PATENT APPLICATION

(11) **EP 2 755 137 A1**
(43) Date of publication of application: **16.07.2014**
(21) Application number: 13275008.4
(22) Date of filing: 14.01.2013
(51) Int. Cl.: G06F 11/26, G05B 13/00

(54) **Avionics data testing**

(71) Applicant: BAE Systems PLC, London SW1Y 5AD (GB)
(72) Inventor: The designation of the inventor has not yet been filed
(74) Representative: BAE SYSTEMS plc Group IP Department

(57) **Abstract**

A test system (and method) for testing mission data for an avionics system, the avionics system comprising a plurality of avionics systems components functionally arranged in a plurality of avionics sub-systems; the test system comprising: one or more processors adapted to perform DASS functionality (43) for reconfigurable mission data and reconfigurable combinations of: i) re-hosted avionics systems components (61, 62) from any one or more of the avionic sub-systems and ii) one or more real-world avionics systems components (161, 162) from any one or more of the avionic sub-systems one or more processors are further adapted to process the DASS functionality so as to provide a re-hosted data bus (32). The test system may comprise: a hardware module (38) comprising replication ports, and an input/output module (36), each having some of the DASS functionality (43) provided at it, and a connection network (34).

## Description

### FIELD OF THE INVENTION

The present invention relates to testing avionics systems, in particular but not limited to testing mission data for and/or in avionics systems by testing the mission data on a mixture of real world avionics system components and re-hosted avionic systems components.

### BACKGROUND

In the field of aircraft, in particular military aircraft, mission data is provided for configuring the avionics system of an aircraft for one or more missions, flights, deployments etc.

It is known to test such mission data on test rigs using data acquisition simulation systems (DASSs). One example of a DASS is ADASS (Advanced Data Acquisition and Simulation System), available from BAE Systems. These are implemented as part of a test rig. The test rigs may simulate or re-host the operation of one or more avionics system components, typically referred to as line replaceable items (LRIs). Conventionally, the mission data is tested on real LRIs with support simulations of other avionics system components.

The LRIs of an avionics system are functionally grouped in sub-systems e.g. display and control, communications, navigation, flight systems, data recording, general systems, etc. It is known to combine testing of mission data on a re-hosted display and control avionics sub-system and one or more complete real world LRIs of a single other avionics sub-system of a given avionics system.

### SUMMARY OF THE INVENTION

The present inventors have realised it would be desirable to provide a test rig for testing mission data that is more flexible and is able to be configured on an ongoing basis for different mission data and different combinations of re-hosted LRIs and real-world LRIs.

The present inventors have further realised it would be desirable to provide a test rig for testing mission data that allows a combination of testing on: i) one or some, but not necessarily all, re-hosted LRIs of a first avionics sub-system and ii) one or some real-world LRIs of a second avionics sub-system different to the first avionics sub-system.

The present inventors have further realised it would be desirable to provide a test rig for testing mission data that allows a combination of testing on: i) one or some, but not necessarily all, re-hosted LRIs of a given avionics sub-system and ii) one or some real-world LRIs of the same avionics sub-system.

In a first aspect, the present invention provides a test system for testing mission data for an avionics system, the avionics system comprising a plurality of avionics systems components functionally arranged in a plurality of avionics sub-systems; the test system comprising: one or more processors adapted to perform DASS functionality for reconfigurable mission data and reconfigurable combinations of: i) re-hosted avionics systems components from any one or more of the avionic sub-systems and ii) one or more real-world avionics systems components from any one or more of the avionic sub-systems.

The one or more processors may further be adapted to process the DASS functionality so as to provide a re-hosted data bus.

The test system may further comprise a hardware module comprising replication ports, and wherein the one or more processors are further adapted to provide some of the DASS functionality at the hardware module.

The test system may further comprise an input/output module, and the one or more processors may further be adapted to provide some of the DASS functionality at the input/output module.

The test system may further comprise a connection network.

The re-hosted bus controller and real-world bus controller may operate independently and in parallel.

An overall Avionics databus message transaction list for the complete databus may be divided into the relevant transaction list subsets for the re-hosted databus and the real-world databus.

The re-hosted bus controller may execute a transaction list containing transactions between re-hosted LRIs only.

A set of inter-bus messages may be automatically determined from an overall Avionics databus message transaction list for passing over the connection network.

The set of inter-bus messages may be automatically determined from an overall Avionics databus message transaction list for passing over the connection network using a procedure comprising the following: for real-world messages sent to re-hosted LRIs the input/output module may monitor the hardware module and when the real-world transaction is performed and received on the LRI port may transfer messages over the connection network to complete the transaction on the re-hosted databus.

The set of inter-bus messages may be automatically determined from an overall Avionics databus message transaction list for passing over the connection network using a procedure comprising the following: for simulated messages which are sent to real-world LRIs the input/output module may schedule the transfer of messages over the connection network to the hardware module in advance of the real-world transaction being performed.

The set of inter-bus messages may be automatically determined from an overall Avionics databus message transaction list for passing over the connection network using a procedure comprising the following: for transactions which are scheduled at pre-determined intervals on the real-world databus the input/output module may synchronise to the real-world bus controller.

In a further aspect, the present invention provides a method for testing mission data for an avionics system, the avionics system comprising a plurality of avionics systems components functionally arranged in a plurality of avionics sub-systems; the method comprising: performing DASS functionality for reconfigurable mission data and reconfigurable combinations of: i) re-hosted avionics systems components from any one or more of the avionic sub-systems and ii) one or more real-world avionics systems components from any one or more of the avionic sub-systems.

In a further aspect, the present invention provides a program or plurality of programs arranged such that when executed by a computer system or one or more processors it/they cause the computer system or the one or more processors to operate in accordance with the method of the preceding aspect.

In a further aspect, the present invention provides a machine readable storage medium storing a program or at least one of the plurality of programs according to the preceding aspect.

### BRIEF DESCRIPTION OF THE DRAWINGS

Figure 1 is a schematic illustration in simplified form of a real-world avionics system of a military aircraft;
Figure 2 is a schematic illustration of a test system for testing mission data for avionic systems, for example the avionics system of Figure 1;
Figure 3 is a schematic illustration showing details of a hybrid rig that forms part of the test system of Figure 2; and
Figure 4 is a schematic illustration showing some elements and modules of Figures 2 and 3 in further detail and in a schematic representation of their operation in terms of data message flow.

### DETAILED DESCRIPTION

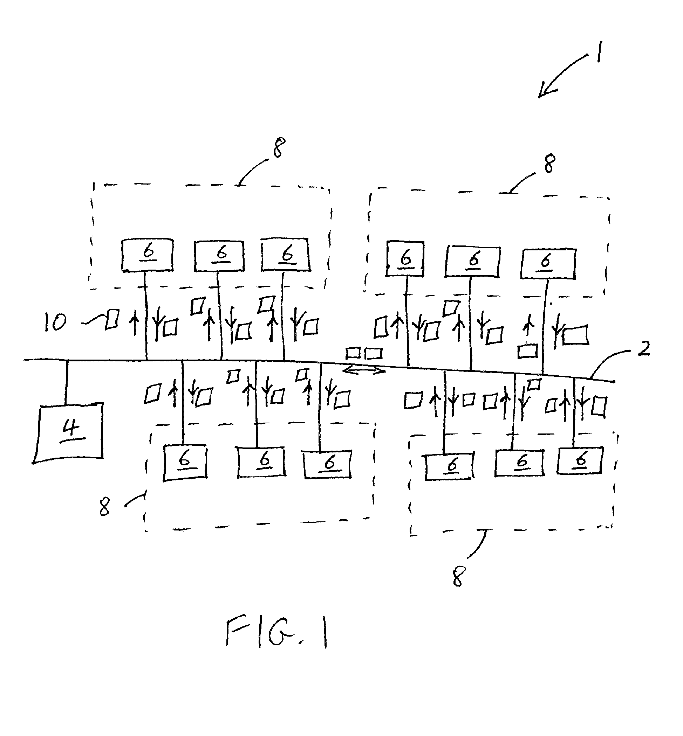

Figure 1 is a schematic illustration in simplified form of a real-world avionics system 1 of a military aircraft. The avionics system 1 comprises a data bus 2, and a bus controller 4 that is coupled to the data bus 2. The avionics system 1 further comprises a plurality of avionics components, which hereinafter are referred to as line replaceable items (LRIs) 6. The LRIs 6 are functionally and connectively grouped into avionics sub-systems 8.

For clarity only four sub-systems 8 are shown in Figure 1, and for each sub-system 8 only three LRIs 6 are shown. However it will be appreciated that in many implementations an aircraft comprises more, indeed often many more, than four avionics sub-systems 8, some of which comprise more, indeed often many more, than three LRIs 6. One example of an avionics sub-system 8 is a display and control sub-system 8, comprising examples of LRIs 6 such as one or more radios, audio warning module, communications interface, and so on. Other examples of avionics sub-systems 8 are a communications sub-system, a navigation sub-system, a flight systems sub-system, a data recording sub-system, a general systems sub-system, threat avoidance sub-system, and so on.

Also shown schematically in Figure 1 are data messages 10. In operation, data messages 10 are passed between the LRIs 6 via the data bus 2 under the control and direction of the bus controller 4. The bus controller 4 executes a message transaction list specifying in which order the messages produced by the different LRIs 6 for transmission to an indicated one of the other LRIs 6 are to be passed along the data bus 2.

It will be appreciated by the person skilled in the art of avionics testing and mission data testing using DASS, and specification of test rigs therefor, that this is a highly complex process, and the full detailed specification of any specific mission data testing process using DASS, and specification of test rigs therefor, would in practice usually require many thousands of pages or data sets, and accordingly the representations in the following description and Figures are, by necessity, in a simplified form. The person skilled in the art of avionics testing and mission data testing using DASS, and specification of test rigs therefor, will be aware of this and will accordingly be able to implement highly complex systems/processes/programs/test rigs based on these simplified descriptions, as this by necessity is a skill routinely employed in this field.

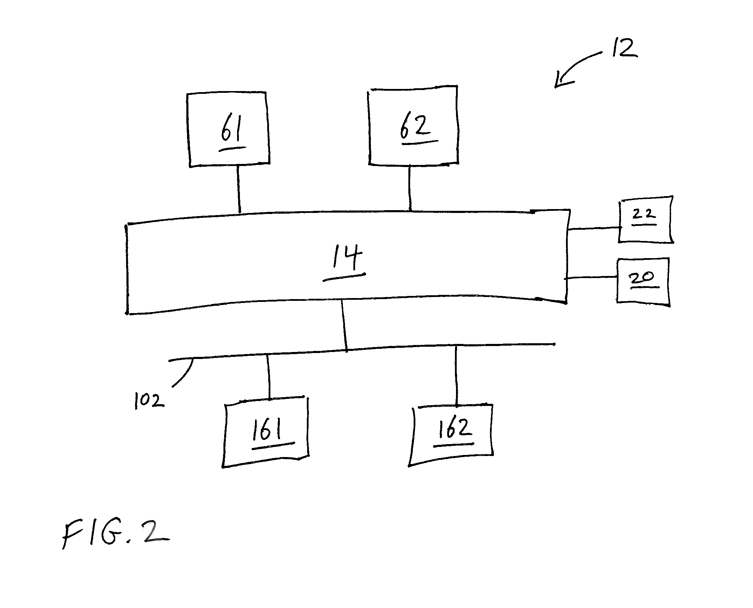

Figure 2 is a schematic illustration of a test system 12 for testing mission data for avionic systems, for example the avionics system 1 of Figure 1.

The test system 12 comprises a hybrid rig 14, and the following elements each coupled directly to the hybrid rig 14: a mission data module 20, a configuration data module 22, by way of example two re-hosted LRIs, namely a first re-hosted LRI 61 and a second re-hosted LRI 62, and also a real-world data bus 102. The test system further comprises, by way of example, two real-world LRIs, namely a first real-world LRI 161 and a second real-world LRI 162. The first real-world LRI 161 and the second real-world LRI 162 are coupled to the hybrid rig 14 via the real-world data bus 102.

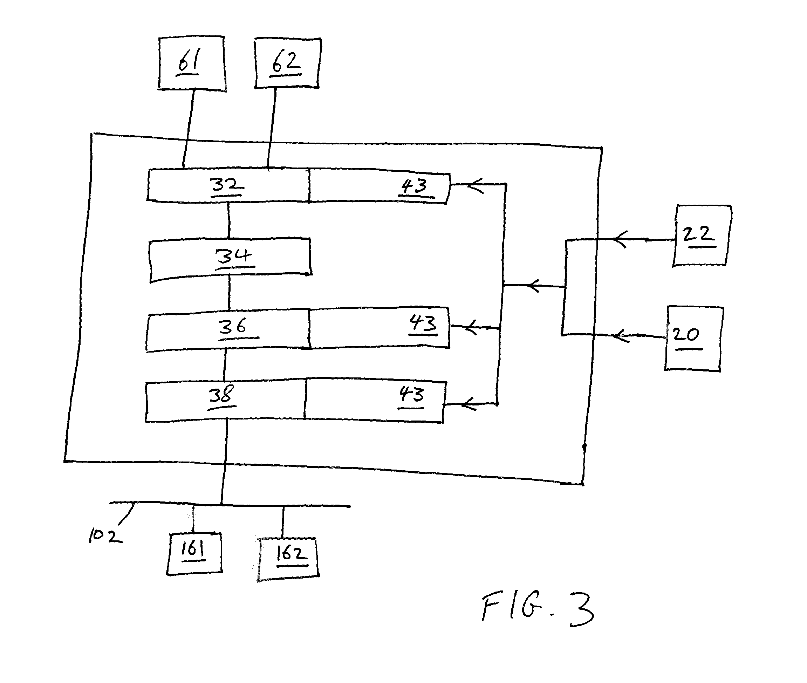

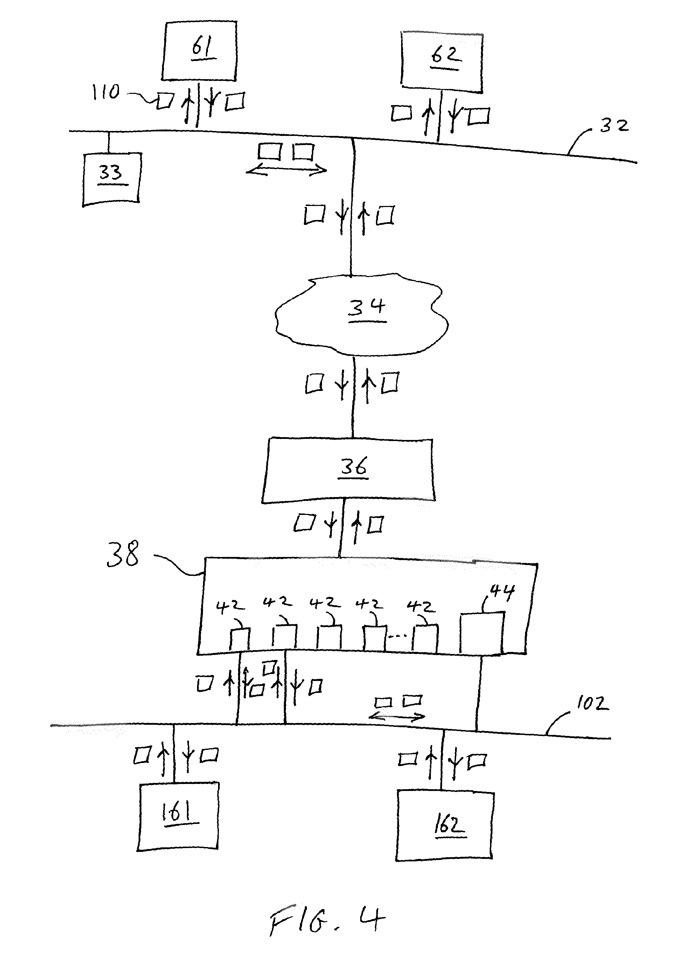

In overview, in operation, mission data to be tested is input to the hybrid rig 14 from the mission data module 20. The hybrid rig 14 allows the mission data to be implemented by the various coupled LRIs in combination, which in this simplified example comprises two re-hosted LRIs 61, 62 and two real-world LRIs 161, 162, each of which may correspond to any of the LRIs 6 from any one or more of the avionics sub-systems 8 of the avionics system 1 described above with reference to Figure 1. The configuration of which LRIs are being used, which are real-world and which are re-hosted, and so on, can be varied and selected as required from test to test. Accordingly, the configuration for a given mission data test and other relevant data changes in response thereto are implemented prior and/or during the test by inputting configuration data into the hybrid rig 14 from the configuration data module 22. The performance and outputs of the different LRIs is monitored, and the outcomes of these, for example compared to expected outcomes, represent testing of the mission data. Further details of the test system 12, in particular the hybrid rig 14, and their operation, will now be described with reference to Figures 3 and 4.

Figure 3 is a schematic illustration showing further details of the hybrid rig 14. The hybrid rig 14 comprises a re-hosted data bus 32, a connection network 34, an input output (I/O) module 36, and a hardware module 38. The re-hosted data bus 32 comprises a bus controller 33 (shown later in Figure 4).

The re-hosted data bus 32 is functionally coupled to those re-hosted LRIs that are taking part in the test, in this example the first re-hosted LRI 61 and the second re-hosted LRI 62, and also to the connection network 34.

The connection network 34 is further connected to the I/O module 36. The I/O module 36 is further coupled to the hardware module 38. The hardware module 38 is further coupled to the real-world data bus 102.

The hybrid rig 14 further comprises functionality of a data acquisition simulation system DASS 43 distributed among and incorporated within the various elements and functional modules of the hybrid rig 14, in particular distributed among and incorporated within the re-hosted data bus 32 (in the case of the re-hosted data bus 32 the DASS functionality 43 in effect provides the re-hosted data bus 32 and its bus controller 33), the I/O module 36, and the hardware module 38. In this embodiment the DASS functionality is that of ADASS (Advanced Data Acquisition and Simulation System), available from BAE Systems. However, in other embodiment other examples of DASS may be used. It will be appreciated that the skilled person may distribute the functionality of the DASS among, and incorporate the functionality of the DASS within, the various elements and modules of the hybrid rig 14 in any desired manner. Further details are given later below of how this is done in this particular embodiment. Each of the re-hosted data bus 32 and its DASS functionality 43, the I/O module 36 and its associated DASS functionality 43, and the hardware module 38 and its associated DASS functionality 43, are further coupled to the mission data module 20 and the configuration data module 22, in order to receive mission data and configuration data.

Figure 4 is a schematic illustration showing some elements and modules of Figures 2 and 3 in further detail and in a schematic representation of their operation in terms of data message flow. The elements and modules shown are as follows: the first re-hosted LRI 61, the second re-hosted LRI 62, the re-hosted data bus 32, the bus controller 33, connection network 34, the I/O module 36, the hardware module 38, the real-world data bus 102, the first real-world LRI 161, and the second real-world LRI 162. The elements and modules in Figure 4 operate under the effects of the DASS functionality 43 (not shown in Figure 4) described above.

The hardware module 38 comprises a set of physical connections that provide an emulation of a plurality of (logical) LRI ports 42, and a bus controller port 44, all coupled to the real-world data bus 102. Each real-world LRI taking part in the test is allocated its own (logical) LRI port 42.

Also shown schematically in Figure 4 are data messages 110. In operation, the data messages 110 are passed between both the re-hosted LRIs 61, 62 and the real-world LRIs 161, 162 i.e. the data messages may, if operation of the avionics system and the mission data demands it, pass (in either or both directions) between any pairing formed from any of the re-hosted LRIs and the real-world LRIs, i.e. in this embodiment between the two LRIs of any one or more of the following pairs of LRI: i) the first re-hosted LRI 61 and the second re-hosted LRI 62; ii) the first re-hosted LRI 61 and the first real-world LRI 161; iii) the first re-hosted LRI 61 and the second real-world LRI 162; iv) the second re-hosted LRI 62 and the first real-world LRI 161; v) the second re-hosted LRI 62 and the second real-world LRI 162; and vi) the first real-world LRI 161 and the second real-world LRI 162. In addition the case of broadcast messages allow data messages to be transferred from a single source LRI to multiple receive LRIs in any mixture of re-hosted or real-world LRIs.

The bus controller 33 executes a message transaction list specifying in which order the messages produced by the different LRIs 6 for transmission to an indicated one of the other LRIs (re-hosted or real-world) are to be passed along and between the re-hosted data bus 32 and the real-world data bus 102.

Data messages 110 from one of the re-hosted LRIs 61, 62 to the other of the re-hosted LRIs 61, 62 are passed via the re-hosted data bus 32.

Data messages 110 from one of the real-world LRIs 161, 162 to the other of the real-world LRIs 161, 162 are passed via the real-world data bus 10.

Data messages 110 from a re-hosted LRI to a real-world LRI are passed over the following route: from the sending re-hosted LRI 61, 62 to the re-hosted data bus 32 to the connection network 34 to the I/O module 36 to the hardware module 38 to the real world data bus 102 to the receiving real-world LRI 161, 162.

In the reverse direction in corresponding fashion, data messages 110 from a real-world LRI to a re-hosted LRI are passed over the following route: from the sending real-world LRI 161, 162 to the real-world data bus 102 to the hardware module 38 to the I/O module 36 to the connection network 34 to the re-hosted data bus 32 to the receiving re-hosted LRI 61, 62.

Further details of certain of the modules and elements shown in Figure 4 are as follows.

The real-world LRIs 161, 162 comprise real-world electronic and processor circuitry of the real-world avionics system of the real-world aircraft, but are without/not coupled to their corresponding, or at least not all of their corresponding, aircraft hardware.

The hardware module 38 replicates the hardware databus capability from the real-world versions of those LRIs that are taking part in the testing in the form of re-hosted LRIs. The (logical) LRI ports 42 of the hardware module operate to allow the data messages 110 to be input/output to/by the hybrid rig 1 from/to the real-world LRIs in the format they have in the real-world operation. The bus controller port 44 operates to allow data bus instructions/requests to be sent/received by the hybrid rig 1 to/from the real-world LRIs in the format they have in the real-world operation.

The I/O module 36 operates to convert real-world formatted data messages 110 being sent from the real-world LRIs to the re-hosted LRIs into the format used by the re-hosted LRIs. The I/O module 36 further operates to convert real-world data format bus requests being sent from the real-world LRIs to the bus controller 33 of the re-hosted data bus 32 into the format used by the bus controller 33 of the re-hosted data bus 32. The I/O module 36 further operates to convert simulation format data messages 110 being sent from the re-hosted LRIs to the real-world LRIs into the real-world format of the real-world LRIs. The I/O module 36 further operates to convert simulation format data bus instructions being sent from the bus controller 33 of the re-hosted data bus 32 to the real-world LRIs into the format used by the real-world LRIs.

The connection network 34 operates carry out routing instructions and route data messages between the I/O module 36 and the re-hosted data bus 32. In this embodiment, the form of the re-hosted data bus is relatively simple, and so the task of the connection network is correspondingly relatively simple. However, in many other embodiments, the arrangement shown in Figure 4 will be much more complex, including many more LRIs than four, and consequently the re-hosted data bus 32 may comprise a more complicated hierarchy of interconnected data buses and may be controlled by more than the single bus controller 33, such arrangements being readily selected, implemented and adapted as required by the skilled person, and in such embodiments the connection network 34 will serve a more complex role. In any of the embodiments any appropriate conventional connection network may be used, for example an Ethernet arrangement.

Each of the re-hosted LRIs 61, 62 comprises and implements software that is prepared, in correspondence to its respective corresponding real-world LRI, for use, when coupled to the hybrid rig 14, with the DASS functionality provided by the hybrid rig 14 as described earlier above. Such software is sometimes referred to as partner provided software (PPSW). The provision and implementation of such software is well known to the skilled person, usually in terms of being provided for operation of the DASS on just that single re-hosted LRI. Depending on the form of the PPSW, it may or may not be preferable to adapt the PPSW previously provided for a given single LRI to provide an adapted PPSW for that LRI for use in this embodiment where plural LRIs are being tested. Further details are given later below of how a "single use" PPSW may be adapted, if desired or required, for use with the multiple LRI implementation form of the hybrid rig 14.

Thus the hybrid rig 14 provides an arrangement and method for mixing and matching the inclusion, in mission data testing, of one or more re-hosted LRIs and one or more real-world LRIs selected as desired form different or common avionic sub-systems 8.

Apparatus, including the re-hosted and real-world LRIs and the hybrid rig, and the modules and elements comprised by the hybrid rig, for implementing the above arrangement, may be provided by configuring or adapting any suitable apparatus, for example one or more computers or other processing apparatus or processors, and/or providing additional modules. The apparatus may comprise a computer, a network of computers, or one or more processors, for implementing instructions and using data, including instructions and data in the form of a computer program or plurality of computer programs stored in or on a machine readable storage medium such as computer memory, a computer disk, ROM, PROM etc., or any combination of these or other storage media.

As mentioned earlier above, the skilled person may distribute the functionality of the DASS among, and incorporate the functionality of the DASS within, the various elements and modules of the hybrid rig 14 in any desired manner. Further details of how this is done in the above described embodiment, and examples of some of the other possible ways in which this may be done, are as follows.

The hybrid rig (14) may be made up of a number of physical computing devices, such as desktop computers, laptops and 'real time' processors running in industry standard VME rack systems (other configurations, as supported by the DASS may also exist).

A feature of a DASS is to provide a mechanism for each functional component to access data, and control other functions. This mechanism will allow this data access and control between components running on differing physical computing devices.

The types of functional components within the DASS may consist of, for example, functionality to record databus messages 110 (on both the real and re-hosted databuses), functionality to allow a simulation of the 'environment' to pass data to the LRIs (re-hosted or real-world) - this is often done to provide sensor inputs which can include simulation of e.g. a threat, of the real world (e.g. altitude, speed) etc. Other components may also be provided.

In the case of only requiring re-hosted LRIs (61 and 62) then the entire DASS and Hybrid Rig may be configured to operate on a single desktop computer. In this configuration all components (e.g. recording, threat simulation, the re-hosted LRIs) are all sharing the same memory of the desktop computer. Each has the necessary access to the relevant data.

In the case of a more complex configuration, requiring re-hosted LRIs (61, 62), real-world LRIs (161 and 162) and multiple databuses, then the re-hosted LRIs may run on one or more desktop computers and on processors within an industry standard VME rack system, the recording and threat simulation functions (and others) may run on one or more separate desktop computers.

The DASS system will provide a means to pass data and control between these functions, using a mix of e.g. standard Ethernet network connections, specialised interface modules provided by the supplier of a VME racking system, and specialised functionality provided within the DASS by the DASS supplier.

The DASS I/O module 36 in conjunction with the connection network 34 will use the databus message transaction list to determine the correct databus messages 110 which are to be transferred between the re-hosted 32 and real databus connections 102. Due to the latency (delay) of the connection network 34, the I/O module implements functions to ensure correct operation of the re-hosted databus 32 and the real-world databus 102.
a) The re-hosted bus controller 33 and real-world bus controller 44 operate independently and in parallel to alleviate or remove issues that may arise with respect to real-world transactions tending to be unable to be performed in real-time over the connection network 34 to meet the response times of the real-world databus 102.
b) An overall Avionics databus message transaction list for the complete databus is divided into the relevant transaction list subsets for the re-hosted 32 and real-world databuses 102.
c) The re-hosted bus controller 33 executes a transaction list containing transactions between re-hosted LRIs (61, 62) only.
d) The real-world bus controller 44 executes a transaction list comprising transactions with at least one real-world LRI (161,162).
e) A set of inter-bus messages are automatically determined from the overall Avionics databus message transaction list which need to be or are desired to be passed over the connection network 34 using the following procedure:
f) For real-world messages sent to re-hosted LRIs (61,62) the I/O module 36 will monitor the hardware module 38 and when the real-world transaction is performed and received on the LRI port 42 will transfer the message contents 110 over the connection network 34 to complete the transaction on re-hosted databus 32.
g) For simulated messages which are sent to real-world LRIs (161,162) the I/O module 36 schedules the transfer of the message 110 over the connection network 34 to the hardware module 38 in advance of the real-world transaction being performed.
   a. For transactions which are scheduled at pre-determined intervals on the real-world databus 102 the I/O module 34 synchronises to the real-world bus controller 44.
   b. For the remaining transactions which are performed on an ad-hoc basis by the real-world bus controller 44 then the I/O module 36 reads the re-hosted databus 32 at a configured fixed sample rate as requested by the re-hosted LRI.

Details of how a "single use" PPSW may be adapted, if desired or required, for use with the multiple LRI implementation form provided by the hybrid rig 14, in the case of the above embodiment, are as follows.

The PPSW is provided to operate within a real LRI (161 or 162) through provision of an interface layer. This interface layer, sometimes termed Application Provided Software (APSW), provides a means to a) pass data messages (110) between the PPSW and a real databus (102) connected to the real LRI; b) if needed act as a bus controller (33) on the real databus (102); c) control specialised hardware within the LRI (161 or 162) such as timers, other interfaces etc..

When re-hosting the PPSW to operate within a re-hosted databus environment (32) provided by a component of the DASS (43) either the DASS is required to implement the same APSW functionality (acting as an interface layer to the re-hosted databus) and/or the PPSW is modified to work with a DASS provided APSW interface layer.

Skilled practitioners will appreciate that often the APSW in real LRIs may differ from one another, thus the decision to modify the PPSW to work with a standard DASS provided APSW may prove more efficient than creating numerous APSW interfaces within the DASS.

In addition, in creating the PPSW the programing language used (e.g. the Ada language) may allow the PPSW to link to the real LRI hardware in other means than via the APSW, e.g. provide a means to read a status register at a fixed memory location within the environment the PPSW runs in. In this instance the PPSW may require modification to provide this 'status register' via a different mechanism (e.g. a standard variable passed to the PPSW from the DASS).

A skilled practitioner in the appropriate PPSW programming language will be able to detect such issues and will understand how to modify the PPSW accordingly to address the issue.

## Claims

1. A test system for testing mission data for an avionics system, the avionics system comprising a plurality of avionics systems components functionally arranged in a plurality of avionics sub-systems; the test system comprising:
one or more processors adapted to perform DASS functionality (43) for reconfigurable mission data and reconfigurable combinations of: i) re-hosted avionics systems components (61, 62) from any one or more of the avionic sub-systems and ii) one or more real-world avionics systems components (161, 162) from any one or more of the avionic sub-systems.

2. A test system according to claim 1, wherein the one or more processors are further adapted to process the DASS functionality so as to provide a re-hosted data bus (32).

3. A test system according to claim 1 or claim 2, further comprising a hardware module (38) comprising replication ports, and wherein the one or more processors are further adapted to provide some of the DASS functionality (43) at the hardware module (38).

4. A test system according to any of claims 1 to 3, further comprising an input/output module (36), and wherein the one or more processors are further adapted to provide some of the DASS functionality (43) at the input/output module (36).

5. A test system according to any of claims 1 to 4, further comprising a connection network (34).

6. A test system according to any of claims 1 to 5, wherein a re-hosted bus controller (33) and a real-world bus controller (44) operate independently and in parallel.

7. A test system according to any of claims 1 to 6, wherein an overall Avionics databus message transaction list for the complete databus is divided into the relevant transaction list subsets for the re-hosted databus (32) and the real-world databus (102).

8. A test system according to any of claims 1 to 7, wherein the re-hosted bus controller (33) executes a transaction list containing transactions between re-hosted LRIs (61, 62) only.

9. A test system according to any of claims 1 to 8, wherein a set of inter-bus messages (110) are automatically determined from an overall Avionics databus message transaction list for passing over the connection network (34).

10. A test system according to claim 9, wherein the set of inter-bus messages (110) are automatically determined from an overall Avionics databus message transaction list for passing over the connection network (34) using a procedure comprising the following:
for real-world messages sent to re-hosted LRIs (61,62) the input/output module (36) monitors the hardware module (38) and when the real-world transaction is performed and received on the LRI port (42) transfers messages (110) over the connection network (34) to complete the transaction on the re-hosted databus (32).

11. A test system according to claim 9 or claim 10, wherein the set of inter-bus messages (110) are automatically determined from an overall Avionics databus message transaction list for passing over the connection network (34) using a procedure comprising the following:
for simulated messages which are sent to real-world LRIs (161,162) the input/output module (36) schedules the transfer of messages (110) over the connection network (34) to the hardware module (38) in advance of the real-world transaction being performed.

12. A test system according to claim 11, wherein the set of inter-bus messages (110) are automatically determined from an overall Avionics databus message transaction list for passing over the connection network (34) using a procedure comprising the following:
for transactions which are scheduled at pre-determined intervals on the real-world databus (102) the input/output module (34) synchronises to the real-world bus controller (44).

13. A method for testing mission data for an avionics system, the avionics system comprising a plurality of avionics systems components functionally arranged in a plurality of avionics sub-systems; the method comprising:
performing DASS functionality for reconfigurable mission data and reconfigurable combinations of: i) re-hosted avionics systems components (61, 62) from any one or more of the avionic sub-systems and ii) one or more real-world avionics systems components (161, 162) from any one or more of the avionic sub-systems.

14. A program or plurality of programs arranged such that when executed by a computer system or one or more processors it/they cause the computer system or the one or more processors to operate in accordance with the method of claim 13.

15. A machine readable storage medium storing a program or at least one of the plurality of programs according to claim 14.
